# EUROPEAN PATENT APPLICATION

(11) **EP 2 189 604 A1**
(43) Date of publication of application: **26.05.2010**
(21) Application number: 07822988.7
(22) Date of filing: 16.10.2007
(51) Int. Cl.: E05F 11/38, B60J 1/17

(54) **IMPROVED CLAMP AND BASE FOR SECURING GLASS TO A DEVICE INTENDED FOR MOTOR VEHICLE WINDOWS**

(30) Priority: 21.09.2007 ES 200702493
(71) Applicant: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio
(86) International application number: PCT/ES2007/000581
(87) International publication number: WO 2009/037366

(57) **Abstract**

The invention refers to an improved clamp and support for securing glass in motor vehicle windows, in which the clamp is secured by adequate means to the corresponding support, which slides along a rail, making the aforementioned glass slide up and down the window frame. The function of these types of clamps is dual, on the one hand, they must hold the glass firmly, securing it to the corresponding support element, and on the other hand, with the help of this support, also called slider, they must move the glass up and down along the corresponding guides, by means of a second support built into the slider, while at the same time the edges of the glass slide along the corresponding perimeter seals in the window frame.

## Description

More specifically, the invention refers to an improved clamp and support for securing glass in motor vehicle windows, in which the clamp is secured by adequate means to the corresponding support, which slides along a rail, making the aforementioned glass slide up and down the window frame.

The function of these types of clamps is dual, on the one hand, they must hold the glass firmly, securing it to the corresponding support element, and on the other hand, with the help of this support, also called slider, they must move the glass up and down along the corresponding guides, by means of a second support built into the slider, while at the same time the edges of the glass slide along the corresponding perimeter seals in the window frame.

Therefore, the essential requirements are firstly the pressure of the body of the clamp and how it holds the glass, and secondly, that the body of the clamp must be strong enough to support the weight of glass, and the friction of the glass against the seal, transmitting these stresses to the support when the glass slides up or down.

The support, designed to enable the adjustment of the mentioned clamps, has an elongated body, in the shape of spread wings, with grooves near the ends of these wings and tabs at the lower end, so the combination of grooves and tabs comprises a system of initial attachment of the clamps to the support and then a system to adjust the glass to the support and align it to the window frame.

The price factor is also important when designing car components, and this improved clamp is no exception, thus, in addition to the design features, it is important to select the right material for the parts, as well as taking into account the strength of the clamp when subject to the aforementioned stresses and its easy placement on the support, the combination of clamps and supporting element enabling vertical and horizontal adjustment of the support, therefore, the clamp will be made by plastic injection moulding.

The mentioned clamp has a "U"-shaped body, between the arms of which it is joined to the support one in each arm, with two clamps for each support, so that each clamp holds the glass at one point, and these two same points are secured to the support, securing the glass to the support, both horizontally and vertically. The glass is held to the clamp by the outer part of one of the arms of the clamp, with of a head boss split into three or more parts or tabs separated by grooves, the lug has a drilled central hole, to which the corresponding constant section screw is fitted, so that when it advances through the inner part of the boss and its drilled hole, of decreasing section, the split head opens outwards moving its tabs outwards, stopping the glass from moving with relation to the clamp.

The clamps are fitted to the support or slider, which occupies the space between the two arms of the clamp, the support being designed so that near its ends there are some grooves, which together with the tabs on the perimeter of the support, make possible to adjust the glass to the support, both vertically and horizontally.

Other details and characteristics shall be shown throughout the description below referring to drawings attached to this report which are shown for illustrative but not limiting purposes a practical embodiment of the invention.

Below is a detailed list of the parts of the invention which are shown in the drawings preceded by a number for identification: (10) clamp, (11) base of the clamp, (12-13) arms, (14) boss, (15) head, (16) cut back, (17) drilled hole, (18) chamfer, (19) teeth, (20) angled end, (21) supporting element, (22) ends of the support, (23) groove, (24) groove, (25) grooved area, (26) drilled holes, (27) tabs, (28) tab, (29) space, (30) hole, (31) drilled hole, (32) screw, (33) ramps, (34) glass, (35) tabs, (36) grooves, (37) drilled hole, (38) groove, (39) toothed area, (40) distance.
Fig. 1 is a top plan view of clamp (10).
Fig. 2 is a longitudinal cross section view, in elevation by D - D, according to Fig. 5.
Fig. 3 is a longitudinal cross section view, in elevation by A - A, according to Fig. 4.
Fig. 4 is a front elevation view of the clamp (10), showing one of its faces.
Fig. 5 is a front elevation view of the clamp (10), from the opposite face to that shown in Fig. 4.
Fig. 6 is a plan view of the base (21), to the ends of which the clamps are secured (10).
Fig. 7 is a plan view of the base (21) seen from the side.

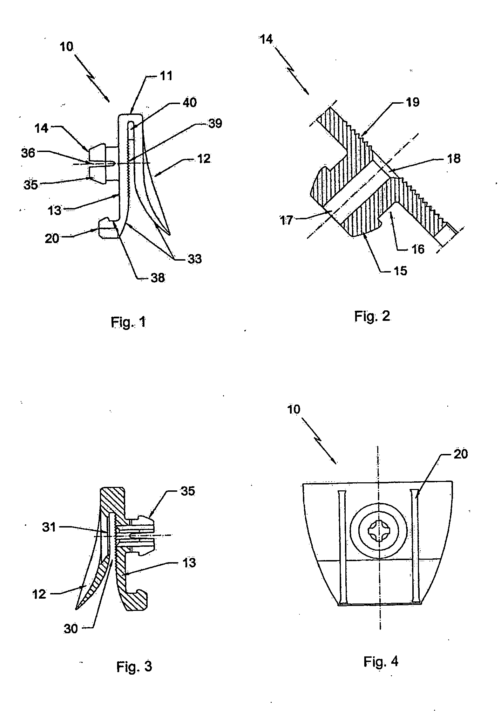

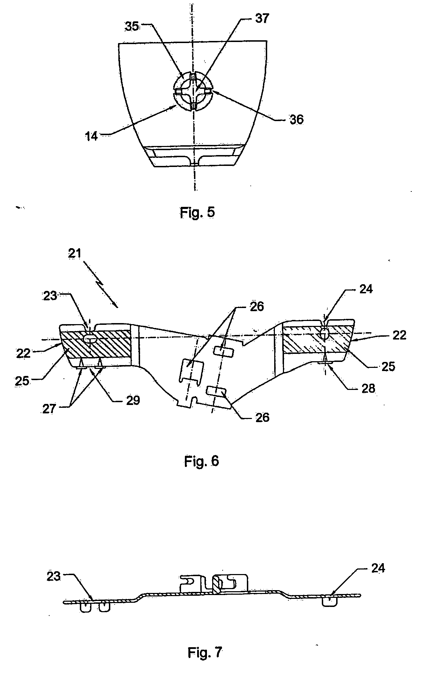

In one of the preferred embodiments of the present invention and as can be seen in Figs. 1 and 6, it is composed of the two clamps (10) and the support (21). The clamps (10) incorporating the glass (34), fit into the proximity of the ends (22) of the support (21), thanks their "U"-shaped configuration, holding the support (21) between its two arms (12 - 13).

The clamps (10), as can be seen in Fig. 1, have a "U"-shaped configuration, with two arms (12 - 13) that delimit a cavity (30) in which the support (21) is press-fitted, facilitating its insertion in (30) thanks to the ramps (33) on the inside of the arms (12 - 13).

To align the glass (34) in the window frame of a car body (not represented in the figures), the parts upper parts of the ends (22) of the support (21) have some grooves (23 - 24), which work in combination with the tabs (27 - 28) projecting from the lower part of the ends (22), See figures 6 and 7.

The arm (12) of a clamp (10) is joined to arm (13), through the base (11), as can be seen in Fig. 1. This arm (12) has a slightly concave shape and are reinforced by ribs (20), as can be seen in Fig. 4, with a drilled hole (31) in the middle (12), for the passage of a screw (32), not shown in the illustrations. The straight arm (13) has an angled end (20), which when fitted to the clamp (10) in the support (21) bordering with the tabs (27 - 28).

In the middle of the arm (13) there is a boss (14) perpendicular to (13) and facing outwards, whose head is composed of more than two tabs (35), separated from one another by the grooves (36), between these tabs (35) there is a drilled hole (37) for the passage of the screw (32) not shown in the figures, thus, according to this conventional solution, when it is threaded into the head (14) as the section of the drilled hole (37) is decreasing in diameter, the tabs (35) expand, pressing the drilled hole in the glass (34) for this purpose.

The glass (34) has two holes to which the boss (14) is fitted, being secured (34) to the external face of (13), and its bottom edge of (34) resting on the angled end (20), with the result that the two clamps (10) are fixed onto the glass (34), as its thickness coincides with the width of the groove (38) and the screws (32) are screwed into the drilled hole (37).

The support (21), which also acts as a slider by means of a second support regarding a sliding rail not shown in the figures and which is housed in the drilled holes (26), See Fig. 6 with grooved areas (25), which in collaboration with the toothed area (39), ensure the fixing of the clamps (10) to the support (21).

Glass alignment (34) with regard to the support (21) is carried out firstly with a boss (14) of one clamp (10) in the slot (23), then the placement of the second boss (14) of a second clamp (10) in the groove (24), all in combination with the tabs (25) separated by a space (29), and the tab (28).

Fore/aft adjustment of the glass (34) can be made by modifying the position of the grooves (23 and 24) in the support (21). Vertical adjustment is carried out by the lower part of the clamps (10), which rest on the tabs (27-28-29) of the support. As the support area between the clamp (10) and the tabs (27-28-29) is different in each wing (12-13) of the support (21), modifying the central area of the lower part of the clamp (10) varies the vertical adjustment of the glass (34) and its angle, as the clamps (10) "grips" different areas of the support (21).

Having sufficiently described this invention using the drawings attached, it is easy to understand that any modification may be made to the detail which may be deemed to be appropriate, whenever these changes do not alter the essence of the invention summarised in the following claims.

## Claims

1. "IMPROVED CLAMP AND SUPPORT FOR SECURING GLASS TO A DEVICE INTENDED FOR MOTOR VEHICLE WINDOWS" in which supports are used for mounting the panes of glass to a sliding support, by means of a boss with tabs separated by grooves and the rear alignment of the glass to the car window held by the clamps (10) coupled to a support (21) by its ends (22), the glass (34) being fitted to the outer part of the arm (13) of the clamp (10) with the aid of a boss (14) extending from outwardly expandable flanges (35). In turn, the clamps (10) are fitted in the above-mentioned end portions of the base (21) with the aid of grooves (23, 24) provided along the upper edge of the end portions (22) and projecting tabs (27, 28) provided along the lower edge of the end portions (22) to adjust the glass (34) vertically and horizontally.

2. "IMPROVED CLAMP AND SUPPORT FOR SECURING GLASS TO A DEVICE INTENDED FOR MOTOR VEHICLE WINDOWS" according to the Claim 1, **characterised by** the fact that the clamp (10) has a "U"-shaped configuration, with two arms (12 - 13) that delimit a cavity (30) in which the support (21) is press-fitted from the ends (22), facilitating its insertion in (30) thanks to the ramps (33) on the inside of the arms (12 - 13).

3. "IMPROVED CLAMP AND SUPPORT FOR SECURING GLASS TO A DEVICE INTENDED FOR MOTOR VEHICLE WINDOWS" according to the Claim 1, **characterised by** the fact that the arm (12) is joined to arm (13) through the base (11), the arms (13) being slightly concave and reinforced by ribs (20), with a drilled hole (31) in the middle of the arm (12) for the passage of a screw (32), whereas the arm (13) is straight and has an angled end (20), which once fitted onto the clamp (10) in the support (21) borders with the tabs (27 - 28), located at the lower part of the ends (22) of the support (21).

4. "IMPROVED CLAMP AND SUPPORT FOR SECURING GLASS TO A DEVICE INTENDED FOR MOTOR VEHICLE WINDOWS" according to the Claim 1, **characterised by** the fact that the support (21), which in turn acts as a slider by means of a second support, and which in housed in the drilled holes (26), has grooved areas (25) at the ends (22), which in collaboration with the toothed area (39) of the arm (13) of the clamps (10) ensures these clamps (10) are firmly secured to the support (21).
